# EUROPEAN PATENT SPECIFICATION

(11) **EP 3 728 006 B1**
(45) Date of publication and mention of the grant of the patent: **13.03.2024**
(21) Application number: 18833323.1
(22) Date of filing: 13.12.2018
(51) Int. Cl.: B62J 6/02, B62K 5/10

(54) **TILTING MOTORCYCLE WITH ADJUSTMENT OF THE BEAM OF LIGHT EMITTED BY THE HEADLIGHTS AS A FUNCTION OF THE ROLLING ANGLE**
KIPPMOTORRAD MIT EINSTELLUNG DES VON DEN SCHEINWERFERN ABGEGEBENEN LICHTSTRAHLS JE NACH ROLLWINKEL
MOTO BASCULANTE AVEC RÉGLAGE DU FAISCEAU DE LUMIÈRE ÉMIS PAR LES PHARES EN FONCTION DE L'ANGLE DE ROULIS

(30) Priority: 22.12.2017 IT 201700148939
(43) Date of publication of application: 28.10.2020
(73) Proprietor: Piaggio & C. S.P.A., 56025 Pontedera Pisa (IT)
(72) Inventor: DIGLIO, Claudio, 56025 Pontedera, PISA (IT); BARACCHINO, Luigi, 56025 Pontedera, PISA (IT)
(74) Representative: Mitola, Marco
(86) International application number: PCT/IB2018/060041
(87) International publication number: WO 2019/123146

(56) References cited:
- EP-A1- 2 204 312
- EP-A1- 2 605 952
- EP-A1- 2 657 076
- EP-A1- 2 923 889
- EP-A1- 2 982 586
- EP-B1- 2 204 312
- EP-B1- 2 605 952
- EP-B1- 2 657 076
- US-A1- 2014 268 837

## Description

### SCOPE

This invention concerns a motorcycle with a pair of tilting front wheels with adjustment of the beam of light emitted by the headlights according to the rolling angle.

### STATE OF THE ART

As is well known, motorcycles, when cornering, in addition to curving or yawing, tilt or roll in a way that is not negligible and is certainly macroscopically greater than cars. During yawing and the inclination of roll when cornering, headlights or front lights, if of the fixed and/or non-adjustable type, cannot effectively illuminate the stretch of road to be traveled.

This problem is also very much experienced in the automotive sector, where headlights are used which, depending on the yaw (not the roll, which is completely negligible) appropriately direct the light beam produced so as to follow the trajectory traveled by the vehicle as closely as possible, and effectively illuminate the stretch of road to be traveled. In the automotive sector, the orientation of the light beam is adjusted according to the steering angle which, barring any drifts, always gives a true indication of the curvature radius effectively traveled by the vehicle.

In the case of motorcycles, the phenomenon is much more complex. In effect, in addition to yawing, the vehicle tends to roll at angles that are anything but negligible, even on the order of 5 degrees and more. In addition, a motorcycle may yaw substantially without rolling, as is typically the case in low speed maneuvers wherein one steers using the macroscopic rotation of the handlebar. In other cases, the vehicle may also roll and steer without using the steering handlebar simply because, by tilting, the vehicle travels along the lower curvature trajectory given by the shape of the tire casing.

Tilting motorcycles provided with at least three wheels, two of which are steered wheels on the forecarriage, have an intermediate position between a two-wheeled motorcycle and an automobile.

To date, the problem of the orientation of the light beam in curves has been addressed, as mentioned above, both in the automotive sector and in the motorcycle sector.

In particular, in the automotive sector, steering rotation sensors are used, while in the motorcycle sector, wherein the rotation of the handlebar, as seen, would not be significant, accelerometers or oscilloscopes are known to be used to determine the actual inclination of the vehicle, which, as seen, is not necessarily related to the rotation of the handlebar.

These solutions, however effective they may be, are not without their drawbacks.

In effect, these are expensive solutions because they require the addition of ad hoc sensors that must also be precise, fast and reliable in light of the speed with which a motorcycle may change trim, inclination and other parameters of driving dynamics. EP 2 204 312 A1 shows the preamble of claim 1.

### PRESENTATION OF THE INVENTION

The need is therefore felt to resolve the drawbacks and limitations cited with reference to the known art.

Such requirement is satisfied by a motorcycle according to claim 1.

### DESCRIPTION OF THE DRAWINGS

Further features and advantages of the present invention will become more apparent from the following description of the preferred and non-limiting examples of embodiment thereof, wherein:

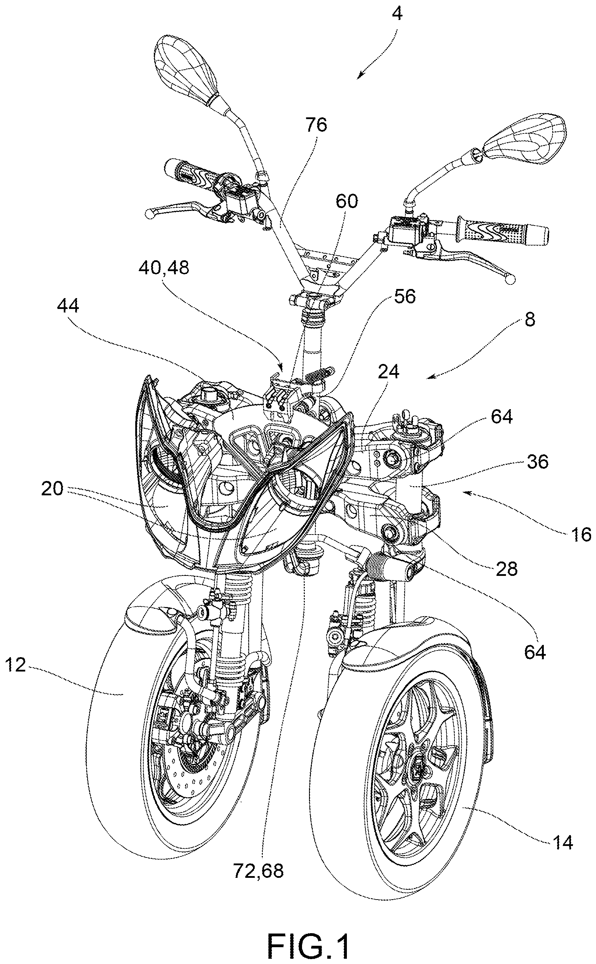

- figure 1 is a perspective view of the forecarriage of a tilting motorcycle according to an embodiment of the present invention;
- figure 2 represents a front view of the motorcycle in figure 1, in a configuration with the front wheels perpendicular to the ground;
- figure 3 represents a front view of the motorcycle in figure 1, in a configuration with the front wheels inclined relative to the ground;

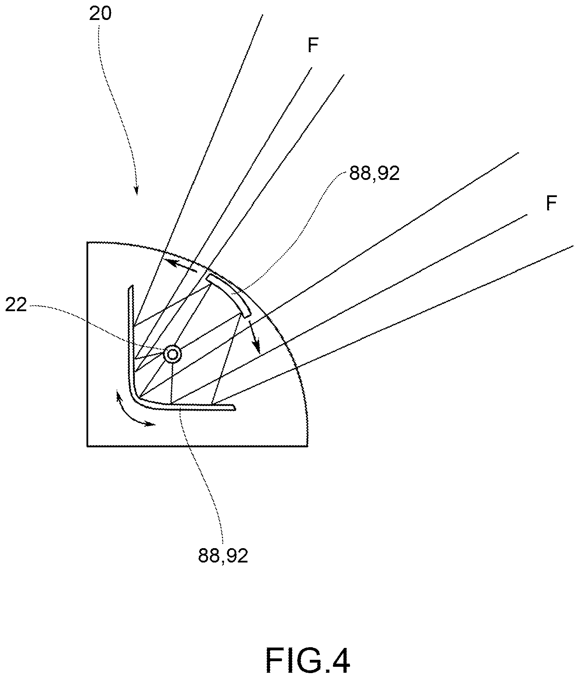

- figure 4 is an enlarged schematic view of a headlight of a motorcycle according to an embodiment of the present invention.

The elements or parts of elements in common between the embodiments described hereinafter will be indicated at the same numerical references.

### DETAILED DESCRIPTION

With reference to the aforesaid figures, a collective schematic view of a tilting motorcycle according to the present invention is collectively indicated at 4.

For the purposes of the present invention, it should be noted that the term "tilting motorcycle" is to be considered in the broad sense, comprising any type or architecture of motorcycle having at least three wheels with at least two front steered wheels, and at least one rear wheel.

Such definition includes, therefore, both motorcycles having three wheels, for example with two paired steered wheels on the forecarriage and one drive wheel on the rear axle, but also so-called quadricycles with two steered wheels on the front axle and two tilting wheels on the rear axle.

The tilting motorcycle 4 with at least three wheels comprises a forecarriage frame 8, a pair of front wheels 12,14 kinematically connected to each other and to the forecarriage frame 8 by means of a rolling kinematic mechanism 16, and at least one front headlight 20 suitable to emit a light beam.

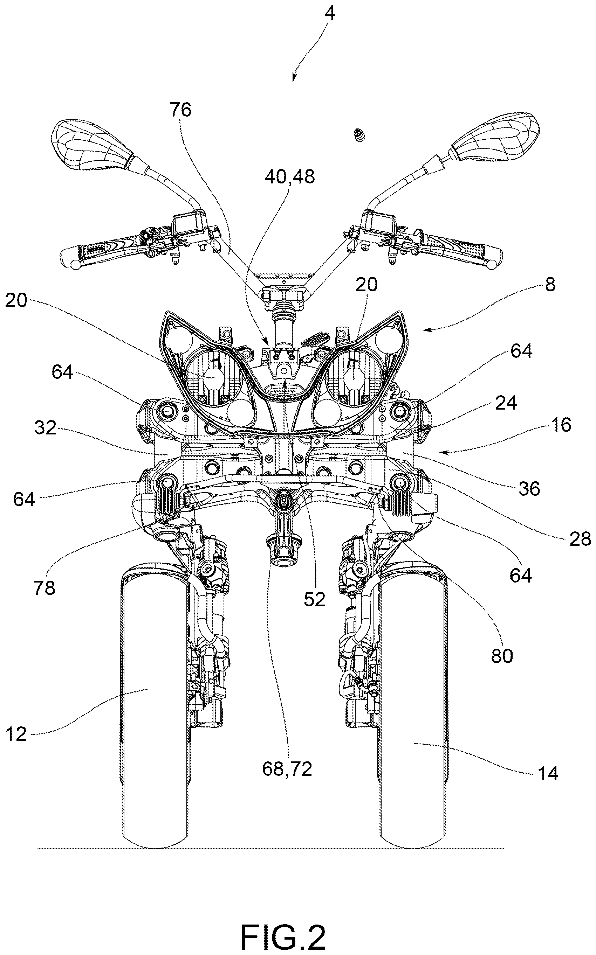

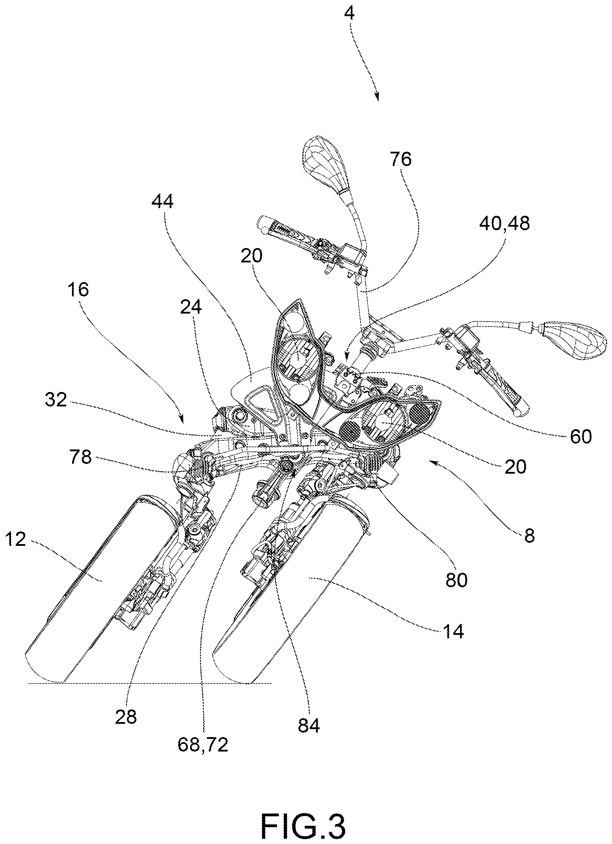

According to the invention, the front headlight 20 is fixedly connected to the forecarriage frame 8, in other words it has a fixed position with respect to the frame by following its steering and rolling movements. Therefore, during steering/rolling movements of the vehicle the front headlight 20 maintains the same position with respect to the frame (see figures 2 and 3).

According to the invention, the kinematic rolling mechanism 16 is an articulated quadrilateral structure comprising two crosspieces, one upper 24 and one lower 28, and two respective lateral uprights 32 and 36 hinged to the crosspieces 24 and 28. The rolling kinematic mechanism 16 allows the front wheels 12,14 to roll and be steered.

The tilting motorcycle 4 further comprises measuring means 40 suitable to measure an angle of rotation of said rolling kinematic mechanism 16. The angle of rotation corresponds to the rolling angle of the pair of front wheels 12,14, i.e. the angle of inclination that the front wheels 12,14 assume relative to the ground.

In other words, the measuring means 40 are suitable for measuring an angle of rotation of the rolling kinematic mechanism 16, i.e. of the articulated quadrilateral, which is uniquely connected, by means of the same kinematic mechanism, to the rolling angle of the pair of front wheels 12,14.

To measure the rolling angle of the front wheels, various solutions are described below. Different solutions are considered possible and still fall within the inventive concept of the present invention.

For example, in one embodiment, the angle of rotation is a relative angle measured on the articulated quadrilateral 24,28, 32,36. In particular, it is measured between at least two elements of the articulated quadrilateral chosen from among:
- an upper 24 or lower crosspiece 28 or a lateral upright 32,36 and a fixed element of the forecarriage frame 8;
- an upper 24 or lower crosspiece 28 and a lateral upright 32,36;
- said pair of front wheels 12,14;
- or a combination thereof.

According to a possible embodiment, at least one of the upper 24 or lower 28 crosspieces is integrally joined with a disc portion 44.

In this case, the measuring means 40 comprise a rotation sensor 48 which measures the angle of rotation of a marking 52 of the disc portion 44 relative to a fixed point of the forecarriage frame 8.

More specifically, the fixed point of the forecarriage frame 8 is, for example, a central upright 56 which rotatably supports said upper 24 or lower crosspiece 28 along the centerline.

According to one embodiment, the disc portion 44 is further joined to blocking means 60, selectively operable to block the rotation of the articulated quadrilateral. In this way, it is possible to activate the blocking means 60 between a blocked rolling configuration and a free configuration.

According to a further embodiment, the measuring means 40 comprise a rotation sensor 48 which measures the relative rotation between an upper 24 or lower crosspiece 28 and a lateral upright 32,36.

It is also possible to place the rotation sensor 48 at a lateral rolling hinge 64 that connects the upper 24 or lower crosspiece 28 and the lateral upright 32,36.

According to a further embodiment, the measuring means 40 comprise a rotation sensor 48 which measures the relative rotation between the pair of front wheels 12,14. More specifically, the motorcycle comprises a steering device 68 equipped with a central rod 72, connected to a handlebar 76, and a pair of transmissions 78,80, each connected to a corresponding front wheel 12,14. The rotation sensor 48 measures the rotation of the transmissions 78,80 of the front wheels 12,14.

The central rod 72 may be connected to the handlebar 76 by means of a central rolling hinge 84. The measuring means 40 measure the rotation of the central rod 72 around the central rolling hinge 84.

The tilting motorcycle 4 further comprises means of adjusting the orientation and/or shape 88 of the light beam F produced by the at least one front headlight 20, operatively connected to the measuring means 40 in order to change the orientation and/or shape of the light beam F depending on the value or values of rotation measured by the same measuring means 40. In other words, the adjusting means act on the light beam F, not on relative position of the front headlight with respect to the frame. In fact, according to present invention, the position of the front headlight 20 remains fixed.

According to a possible embodiment, the means of adjusting the orientation and/or shape 88 of the light beam comprise at least one movable element 92 suitable to orient the light beam F produced. In other words - in a first embodiment - the movable element 92 is shaped like a shutter and allows a light beam source to be partially obscured in order to generate corresponding light beams that, depending on the position and shape with which the light beam source is obscured, to generate light beams with different orientation and/or shape.

In one variant embodiment, the element 92 is a movable reflective element capable of reflecting the light beam source to generate a reflected light beam oriented towards the desired area. In particular, the movable element 92 is chosen among:
- a reflective element of the light beam F;
- an element at least partially opaque to the light beam F.

In any event, if the movable element reflects or shields at least partially the light beam F, the effect obtained will be to modify the orientation and/or the shape of the light beam F.

According to a further possible embodiment, the means of adjusting the orientation and/or shape 88 of the light beam F are programmed to turn the light sources of said at least one front headlight 20 on or off, depending on the rotation value measured by the measuring means 40. In other words, the headlight 20 may comprise a plurality of light sources 22, for example, a matrix of light-emitting diodes (LEDs), which may be switched on and off independently so as to illuminate all or only some of the said LEDs through the means of adjusting the orientation and/or shape 88 of the light beam F, according to the rotation value obtained by the measuring means 40.

The light sources 22 are typically shaped to illuminate different areas in front of the headlight 20; therefore, a differentiated switching on of the light sources allows the overall light output to be modified at will, as well as the shape and orientation of the light beam F collectively emitted.

It is also possible to provide for such light sources 22 to be movable, e.g. mechanically connected to the means of adjusting the orientation and/or shape 88 of the light beam F, so that it is possible to rotate and/or translate to rotate and/or change the shape of the light beam F emitted.

According to a further embodiment, the means of adjusting the orientation and/or shape 88 of the light beam F are programmed to adjust the light intensity of the light sources of said at least one front headlight 20, depending on the inclination/rotation value measured by the measuring means 40. In this way, for example, it is possible to increase the brightness of some illuminated areas and decrease it in other illuminated areas, depending on the angle measured and thus on the roll of the motorcycle 4.

As may be appreciated from the foregoing, the present invention overcomes the disadvantages of the prior art.

In particular, due to the measurement of physical parameters of the articulated quadrilateral forecarriage, it is possible to know with extreme precision the effective rolling angle of the motorcycle, which, as seen, is the most significant parameter for the adjustment of the beam of light on a motorcycle.

Such measurement is accurate, repetitive and reliable and does not require expensive sensors to be added to the motorcycle.

In this way, the light beam may be reliably and economically adapted in terms of direction and intensity according to the actual driving conditions of the vehicle.

The present invention therefore allows better visibility, especially during night-time driving, and complies with current regulations in terms of safety.

A person skilled in the art, in the object of satisfying contingent and specific requirements, may make numerous modifications and variations to the motorcycles described above, all of which are within the scope of the invention as defined by the following claims.

## Claims

1. Tilting motorcycle (4) with at least three wheels comprising:
- a forecarriage frame (8),
- a pair of front wheels (12,14) kinematically connected to each other and to the forecarriage frame (8) by means of a rolling kinematic mechanism (16),
- at least one front headlight (20) fixed with respect to the frame in its steering and rolling movements and suitable to emit a beam of light (F),
- measuring means (40) suitable for measuring an angle of rotation of said rolling kinematic mechanism (16) said angle of rotation corresponding to the rolling angle of said pair of front wheels (12,14);
- means of adjusting the orientation and/or shape (88) of the light beam (F) produced by the at least one headlight (20), operatively connected to the measuring means (40) in order to change said orientation and/or shape of the light beam (F) depending on the value or values of rotation measured by the measuring means (40);
wherein the front headlight (20) is fixedly connected to the forecarriage frame (8), maintaining a fixed position with respect to the forecarriage frame (8) and following its steering and rolling movements;
**characterized in that** said rolling kinematic mechanism (16) is an articulated quadrilateral structure comprising two upper (24) and lower crosspieces (28) and two lateral uprights (32,36) hinged to said crosspieces (24,28).

2. Tilting motorcycle (4) according to claim 1, wherein said angle of rotation is a relative angle measured between:
- an upper (24) or lower crosspiece (28) or a lateral upright (32,36) and a fixed element of the forecarriage frame (8);
- an upper (24) or lower crosspiece (28) and a lateral upright (32,36);
- said pair of front wheels (12,14);
- or a combination thereof.

3. Tilting motorcycle (4) according to claim 1 or 2, wherein at least one of said lower (28) or upper (24) crosspieces is integrally joined to a disc portion (44), and wherein the measuring means (40) comprise a rotation sensor (48) which measures the angle of rotation of a marking (52) of said disc portion (44) with respect to a fixed point of the forecarriage frame (8).

4. Tilting motorcycle (4) according to claim 3, wherein said fixed point of the forecarriage frame (8) is a central upright (56) which rotatably supports said upper (24) or lower crosspiece (28) along the centerline.

5. Tilting motorcycle (4) according to claim 3 or 4, wherein said disc portion (44) is joined to blocking means (60), selectively operated to block the rotation of the articulated quadrilateral.

6. Tilting motorcycle (4) according to any of the claims from 1 to 5, wherein the measuring means (40) comprise a rotation sensor (48) that measures the relative rotation between an upper (24) or lower crosspiece (28) and a lateral upright (32,36).

7. Tilting motorcycle (4) according to claim 6, wherein the rotation sensor (48) is placed at a lateral rolling hinge (64) which connects the upper (24) or lower crosspiece (28) and the lateral upright (32,36).

8. Tilting motorcycle (4) according to any of the claims from 1 to 7, wherein the measuring means (40) comprise a rotation sensor (48) that measures the rotation between the pair of front wheels (12,14).

9. Tilting motorcycle (4) according to claim 8, wherein the motorcycle comprises a steering device (68) with a central rod (72), connected to a handlebar (76), and a pair of transmissions (78,80) each connected to a corresponding front wheel (12,14), wherein the rotation sensor (48) measures the rotation of the transmissions (78,80) of the front wheels (12,14).

10. Tilting motorcycle (4) according to claim 9, wherein the central rod (72) is connected to the handlebar (76) by means of a central rolling hinge (64), and wherein the measuring means (40) measure the rotation of the central rod (72) around the central rolling hinge (64).

11. Tilting motorcycle (4) according to any of the preceding claims, wherein said means of adjusting the orientation and/or shape (88) of the light beam (F) comprise at least one movable element (92) suitable to direct the light beam (F) produced, in particular said movable element (92) is chosen from among:
- a reflective element of the light beam (F);
- an element at least partially opaque to the light beam (F).

12. Tilting motorcycle (4) according to any of the preceding claims, wherein the means of adjusting the orientation and/or shape (88) of the light beam (F) are programmed to control the turning on/off of light sources of said at least one front headlight (20), depending on the rotation value measured by the measuring means (40).

13. Tilting motorcycle (4) according to any of the claims from 1 to 12, wherein the means of adjusting the orientation and/or shape (88) of the light beam (F) are programmed to adjust the light intensity of light sources of said at least one front headlight (20), depending on the inclination value measured by the measuring means (40).

14. Tilting motorcycle (4) according to any of the claims from 12 to 13, wherein said light sources are configured to illuminate different areas in front of the front headlight (20).

## Patentansprüche

1. Kippmotorrad (4) mit wenigstens drei Rädern, umfassend:
- einen Vorderwagenrahmen (8),
- ein Paar von Vorderrädern (12, 14), welche kinematisch miteinander und mit dem Vorderwagenrahmen (8) mittels eines Wankkinematik-Mechanismus (16) verbunden sind,
- wenigstens einen vorderen Scheinwerfer (20), welcher in Bezug auf den Rahmen in seinen Lenk- und Wankbewegungen fixiert ist und dazu geeignet ist, einen Lichtstrahl zu emittieren (F),
- Messmittel (40), welche dazu geeignet sind, einen Drehwinkel des Wankkinematik-Mechanismus (16) zu messen, wobei der Drehwinkel dem Wankwinkel des Paars von Vorderrädern (12; 14) entspricht;
- Mittel zum Einstellen der Orientierung und/oder der Form (88) des durch den wenigstens einen Scheinwerfer (20) erzeugten Lichtstrahls (F), welche betriebsmäßig mit den Messmitteln (40) verbunden sind, um die Orientierung und/oder die Form des Lichtstrahls (F) in Abhängigkeit des Werts oder der Werte einer Drehung zu ändern, welche durch die Messmittel (40) gemessen wird;
wobei der vordere Scheinwerfer (20) fest mit dem Vorderwagenrahmen (8) verbunden ist, wobei er eine fixierte Position in Bezug auf den Vorderwagenrahmen (8) beibehält und seinen Lenk- und Wankbewegungen folgt;
**dadurch gekennzeichnet, dass** der Wankkinematik-Mechanismus (16) eine gelenkige viereckige Struktur ist, welche zwei obere (24) und zwei untere Querträger (28) und zwei laterale Stützen (32, 36) umfasst, welche mit den Querträgern (24, 28) gelenkig verbunden sind.

2. Kippmotorrad (4) nach Anspruch 1, wobei der Drehwinkel ein relativer Winkel ist, gemessen zwischen:
- einem oberen (24) oder einem unteren Querträger (28) oder einer lateralen Stütze (32, 36) und einem fixierten Element des Vorderwagenrahmens (8);
- einem oberen (24) oder einem unteren Querträger (28) und einer lateralen Stütze (32, 36);
- dem Paar von Vorderrädern (12; 14);
- oder einer Kombination davon.

3. Kippmotorrad (4) nach Anspruch 1 oder 2, wobei wenigstens einer aus dem unteren (28) oder dem oberen (24) Querträger integral mit einem Scheibenabschnitt (44) verbunden ist, und wobei die Messmittel (40) einen Drehsensor (48) umfassen, welcher den Drehwinkel einer Markierung (52) des Scheibenabschnitts (44) in Bezug auf eine fixierte Stelle des Vorderwagenrahmens (8) misst.

4. Kippmotorrad (4) nach Anspruch 3, wobei die fixierte Stelle des Vorderwagenrahmens (8) eine zentrale Stütze (56) ist, welche den oberen (24) oder den unteren Querträger (28) entlang der Mittellinie drehbar haltert.

5. Kippmotorrad (4) nach Anspruch 3 oder 4, wobei der Scheibenabschnitt (44) mit Blockiermitteln (60) verbunden ist, welche selektiv betätigt werden, um die Drehung des gelenkigen Vierecks zu blockieren.

6. Kippmotorrad (4) nach einem der Ansprüche von 1 bis 5, wobei die Messmittel (40) einen Drehsensor (48) umfassen, welcher die relative Drehung zwischen einem oberen (24) und einem unteren Querträger (28) und einer lateralen Stütze (32, 36) misst.

7. Kippmotorrad (4) nach Anspruch 6, wobei der Drehsensor (48) an einem lateralen Wankgelenk (64) platziert ist, welches den oberen (24) oder den unteren Querträger (28) und die laterale Stütze (32, 36) verbindet.

8. Kippmotorrad (4) nach einem der Ansprüche von 1 bis 7, wobei die Messmittel (40) einen Drehsensor (48) umfassen, welche die Drehung zwischen dem Paar von Vorderrädern (12, 14) misst.

9. Kippmotorrad (4) nach Anspruch 8, wobei das Motorrad eine Lenkvorrichtung (68) mit einem zentralen Stab (72), welcher mit einer Griffstange (76) verbunden ist, und einem Paar von Übertragungseinrichtungen (78, 80) umfasst, welche jeweils mit einem entsprechenden Vorderrad (12, 14) verbunden sind, wobei der Drehsensor (48) die Drehung der Übertragungseinrichtungen (78, 80) der Vorderräder (12, 14) überwacht.

10. Kippmotorrad (4) nach Anspruch 9, wobei der zentrale Stab (72) mit der Griffstange (76) mittels eines zentralen Wankgelenks (64) verbunden ist, und wobei die Messmittel (40) die Drehung des zentralen Stabes (72) um das zentrale Wankgelenk (64) messen.

11. Kippmotorrad (4) nach einem der vorhergehenden Ansprüche, wobei die Mittel zum Einstellen der Orientierung und/oder der Form (88) des Lichtstrahls (F) wenigstens ein bewegbares Element (92) umfassen, welches dazu geeignet ist, den erzeugten Lichtstrahl (F) auszurichten, wobei das bewegbare Element (92) insbesondere ausgewählt ist aus:
- einem reflektierenden Element für den Lichtstrahl (F);
- einem für den Lichtstrahl wenigstens teilweise undurchlässigen Element (F).

12. Kippmotorrad (4) nach einem der vorhergehenden Ansprüche, wobei die Mittel zum Einstellen der Orientierung und/oder der Form (88) des Lichtstrahls (F) dazu programmiert sind, das Einschalten/Ausschalten von Lichtquellen des wenigstens einen vorderen Scheinwerfers (20) in Abhängigkeit des Drehwerts zu steuern, welcher durch die Messmittel (40) gemessen wird.

13. Kippmotorrad (4) nach einem der Ansprüche von 1 bis 12, wobei die Mittel zum Einstellen der Orientierung und/oder der Form (88) des Lichtstrahls (F) dazu programmiert sind, die Lichtintensität von Lichtquellen des wenigstens einen vorderen Scheinwerfers (20) in Abhängigkeit des Neigungswerts einzustellen, welcher durch die Messmittel (40) gemessen wird.

14. Kippmotorrad (4) nach einem der Ansprüche von 12 bis 13, wobei die Lichtquellen dazu eingerichtet sind, verschiedene Bereiche vor dem vorderen Scheinwerfer (20) zu beleuchten.

## Revendications

1. Moto basculante (4) avec au moins trois roues comprenant :
- un cadre de train avant (8),
- une paire de roues avant (12, 14) reliées de manière cinématique l'une à l'autre et au cadre de train avant (8) au moyen d'un mécanisme cinématique de roulis (16),
- au moins un phare avant (20) fixé par rapport au cadre dans ses mouvements de direction et de roulis et approprié pour émettre un faisceau de lumière (F),
- des moyens de mesure (40) appropriés pour mesurer un angle de rotation dudit mécanisme cinématique de roulis (16), ledit angle de rotation correspondant à l'angle de roulis de ladite paire de roues avant (12, 14) ;
- des moyens de réglage de l'orientation et/ou de la forme (88) du faisceau de lumière (F) produit par l'au moins un phare (20), reliés opérationnellement aux moyens de mesure (40) afin de modifier ladite orientation et/ou ladite forme du faisceau de lumière (F) en fonction de la valeur ou des valeurs de rotation mesurées par les moyens de mesure (40) ;
dans laquelle le phare avant (20) est relié à demeure au cadre de train avant (8), maintenant une position fixe par rapport au cadre de train avant (8) et suivant ses mouvements de direction et de roulis ;
**caractérisée en ce que** ledit mécanisme cinématique de roulis (16) est une structure quadrilatère articulée comprenant une traverse supérieure (24) et une traverse inférieure (28) et deux montants latéraux (32, 36) articulés sur lesdites traverses (24, 28).

2. Moto basculante (4) selon la revendication 1, dans laquelle ledit angle de rotation est un angle relatif mesuré entre :
- une traverse supérieure (24) ou une traverse inférieure (28) ou un montant latéral (32, 36) et un élément fixe du cadre de train avant (8) ;
- une traverse supérieure (24) ou une traverse inférieure (28) et un montant latéral (32, 36) ;
- ladite paire de roues avant (12, 14) ;
- ou une combinaison de ceux-ci.

3. Moto basculante (4) selon la revendication 1 ou 2, dans laquelle au moins l'une de ladite traverse inférieure (28) ou de ladite traverse supérieure (24) est reliée d'un seul tenant à une partie de disque (44), et dans laquelle les moyens de mesure (40) comprennent un capteur de rotation (48) qui mesure l'angle de rotation d'un repère (52) de ladite partie de disque (44) par rapport à un point fixe du cadre de train avant (8).

4. Moto basculante (4) selon la revendication 3, dans laquelle ledit point fixe du cadre de train avant (8) est un montant central (56) qui supporte de manière rotative ladite traverse supérieure (24) ou ladite traverse inférieure (28) le long d'un axe médian.

5. Moto basculante (4) selon la revendication 3 ou 4, dans laquelle ladite partie de disque (44) est reliée à des moyens de blocage (60), sélectivement actionnés pour bloquer la rotation du quadrilatère articulé.

6. Moto basculante (4) selon l'une quelconque des revendications 1 à 5, dans laquelle les moyens de mesure (40) comprennent un capteur de rotation (48) qui mesure la rotation relative entre une traverse supérieure (24) ou une traverse inférieure (28) et un montant latéral (32, 36).

7. Moto basculante (4) selon la revendication 6, dans laquelle le capteur de rotation (48) est placé au niveau d'une charnière de roulis latérale (64) qui relie la traverse supérieure (24) ou la traverse inférieure (28) et le montant latéral (32, 36).

8. Moto basculante (4) selon l'une quelconque des revendications 1 à 7, dans laquelle les moyens de mesure (40) comprennent un capteur de rotation (48) qui mesure la rotation entre la paire de roues avant (12, 14).

9. Moto basculante (4) selon la revendication 8, dans laquelle la moto comprend un dispositif de direction (68) avec une tige centrale (72), reliée à un guidon (76), et une paire de transmissions (78, 80) chacune reliée à une roue avant (12, 14) correspondante, dans laquelle le capteur de rotation (48) mesure la rotation des transmissions (78, 80) des roues avant (12, 14).

10. Moto basculante (4) selon la revendication 9, dans laquelle la tige centrale (72) est reliée au guidon (76) au moyen d'une charnière de roulis centrale (64), et dans laquelle les moyens de mesure (40) mesurent la rotation de la tige centrale (72) autour de la charnière de roulis centrale (64).

11. Moto basculante (4) selon l'une quelconque des revendications précédentes, dans laquelle lesdits moyens de réglage de l'orientation et/ou de la forme (88) du faisceau de lumière (F) comprennent au moins un élément mobile (92) approprié pour diriger le faisceau de lumière (F) produit, en particulier ledit élément mobile (92) est choisi parmi :
- un élément réfléchissant du faisceau de lumière (F) ;
- un élément au moins partiellement opaque au faisceau de lumière (F).

12. Moto basculante (4) selon l'une quelconque des revendications précédentes, dans laquelle les moyens de réglage de l'orientation et/ou de la forme (88) du faisceau de lumière (F) sont programmés pour commander l'allumage/l'extinction de sources de lumière dudit au moins un phare avant (20), en fonction de la valeur de rotation mesurée par les moyens de mesure (40).

13. Moto basculante (4) selon l'une quelconque des revendications 1 à 12, dans laquelle les moyens de réglage de l'orientation et/ou de la forme (88) du faisceau de lumière (F) sont programmés pour régler l'intensité lumineuse des sources de lumière dudit au moins un phare avant (20), en fonction de la valeur d'inclinaison mesurée par les moyens de mesure (40).

14. Moto basculante (4) selon l'une quelconque des revendications 12 à 13, dans laquelle lesdites sources de lumière sont configurées pour éclairer différentes zones devant le phare avant (20).
